# EUROPÄISCHE PATENTSCHRIFT

(11) **EP 1 389 719 B1**
(45) Veröffentlichungstag und Bekanntmachung des Hinweises auf die Patenterteilung: **24.09.2008**
(21) Anmeldenummer: 03018276.0
(22) Anmeldetag: 12.08.2003
(51) Int. Cl.: F24H 8/00

(54) **Wärmeübertrager für Brennwert-Heizgeräte**
Heat exchanger for high efficiency heaters
Échangeur de chaleur pour chaudières à haut rendement

(30) Priorität: 16.08.2002 DE 10237590
(43) Veröffentlichungstag der Anmeldung: 18.02.2004
(73) Patentinhaber: ROBERT BOSCH GMBH, 70442 Stuttgart (DE)
(72) Erfinder: Laqua, Ekkehard, 75446 Wiernsheim (DE); Waidner, Juergen, 73274 Notzingen (DE); Leuthner, Stephan, 70372 Stuttgart (DE); Volz, Wolfgang, 70197 Stuttgart (DE); Clement, Uwe, 73114 Schlat (DE); Schoebel, Anke, 73207 Plochingen (DE)

(56) Entgegenhaltungen:
- EP-A- 1 136 764
- EP-A- 1 251 319
- EP-A- 1 278 025
- DE-A- 4 134 230

## Beschreibung

Die Erfindung betrifft einen Wärmeübertrager für Brennwert-Heizgeräte mit einem von der erwärmenden Flüssigkeit durchströmten Mantel, an dessen Innenwand in den Innenraum ragende Wärme-Übertragungszapfen angeformt sind, bei dem im oberen Bereich des Innenraumes eine Brennkammer mit Brenner angeordnet ist, bei dem das Abgas den Innenraum durchströmt und bei dem an den unteren Bereich des Mantels eine Kondensatauffangeinrichtung angebracht ist.

### Stand der Technik

Die Wärmeübertrager für Brennwert-Heizgeräte werden bis heute üblicherweise so gebaut, dass sie im oberen Bereich eine Brennkammer zur Aufnahme eines Brenners bilden. Das entstehende Abgas durchströmt den Wärmetauscher-Innenraum von oben nach unten und gibt seine Wärme an die Wärme-Übertragungszapfen und darüber an das im Mantel fließende Medium ab. Bei der Abkühlung des Abgases entsteht Kondensat, das durch die Schwerkraft und die Abgasströmung nach unten abgeleitet wird. Das Kondensat tropft dabei über die weiter unten liegenden Teile des Wärmeübertragers.

Die Temperatur des Wärmeübertragers und damit auch die Temperatur des Abgases nimmt in Strömungsrichtung ab. Das Abgas besteht aus ~72 % N₂, ~ 8 % CO₂ und ~ 18 % H₂O und Restbestandteilen und kondensiert daher bei höheren Temperaturen als reiner Wasserdampf aus. Bei hohen Abgastemperaturen kondensiert zunächst ein Gemisch, welches hauptsächlich aus Säurebestandteilen besteht und einen niedrigen pH-Wert aufweist. Bei niedrigeren Temperaturen kondensieren zunehmend Wasserdampfteile, so dass der pH-Wert steigt und das Kondensat weniger sauer bzw. aggressiv ist. Im Bereich des sauren Kondensats kommt es zu einem starken Korrosionsangriff des Wärmeübertragers. Das saure Kondensat tropft nach unten und vermischt sich mit dem weniger sauren Kondensat. Dies hat zur Folge, dass auch im gesamten anschließenden Wärme-Übertragerbereich Korrosion auftritt, die aufgrund des dort anfallenden Kondensats nicht oder nur in geringerem Maße auftreten würde.

Ein Wärmeübertrager gemäß dem Oberbegriff von Anspruch 1 oder 2 ist aus dem Dokument EP-A2-1 136 764 bekannt.

Es ist Aufgabe der Erfindung, einen Wärmeübertrager der eingangs erwähnten Art zu schaffen, bei dem sich das im brennernahen Bereich anfallende besonders saure Kondensat nicht mit weniger sauren, im brennerferneren Bereich anfallenden Kondensat vermischt und sich nicht über den gesamten Bereich des Wärmeübertragers verteilt.

### Vorteile der Erfindung

Diese Aufgabe wird nach der Erfindung zum einen dadurch gelöst, dass zumindest in einem oberen Bereich des Mantels die Wärme-Übertragungszapfen zum Mantel hin so geneigt angeformt sind, dass das sich bildende Kondensat an den Wärme-Übertragungszapfen entlang zur Innenwand des Mantels abfließt und zum anderen dadurch, dass er einen oberen Wärmeübertrager-Teil und einen unteren Wärmeübertrager-Teil umfasst, und dass die beiden Wärmeübertrager-Teile seitlich so gegeneinander versetzt sind, dass das im oberen Wärmeübertrager-Teil und das im unteren Wärmeübertrager-Teil anfallende Kondensat getrennt voneinander aufnehmbar ist.

Bei der ersten Lösung wird das besonders saure Kondensat an den Wärme-Übertragungszapfen entlang zur Innenwand des Mantels geleitet und tropft an dieser aufgrund der Schwerkraft direkt in die Kondensatauffangeinrichtung, ohne mit weiteren anschließenden Bereichen des Wärmeübertragers in Kontakt zu kommen.

Bei der zweiten Lösung wird das besonders saure Kondensat direkt aus dem oberen Wärmeübertrager-Teil abgeführt und kann sich nicht mit dem weniger sauren Kondensat aus dem unteren, seitlich versetzten Wärmeübertrager-Teil vermischen. Dies erlaubt eine unterschiedliche Materialwahl für die Wärmeübertrager-Teile.

Die Ausgestaltung kann so vorgenommen sein, dass die Wärme-Übertragungszapfen im gesamten Mantel bzw. Mantelbereich geneigt sind.

In vielen Fällen kann es nach der zweiten Lösung auch ausreichend sein, dass die Wärme-Übertragungszapfen der beiden Wärmeübertrager-Teile senkrecht zu dem Mantel angeformt sind.

Der Durchgang des Abgas und die Wärmeabgabe desselben wird dadurch verbessert, dass die Wärme-Übertragungszapfen in mehreren, beabstandeten Lagen angeordnet sind und sich darin beabstandet über den Umfang der Innenwand des Mantels erstrecken. Die Wärme-Übertragungszapfen bieten dann eine große Kontaktfläche für das Abgas.

Die Herstellkosten für den Wärmeübertrager lassen sich dadurch klein halten, dass der Wärmeübertrager und die Wärmeübertrager-Teile als Sandguss-Wärmezellen ausgebildet und hergestellt sind.

Bei dem geteilten Wärmeübertrager lassen sich dadurch die Herstellkosten klein und die Lebensdauer groß halten, dass der obere Wärmeübertrager-Teil mit den angeformten Wärme-Übertragungszapfen aus korrosionsbeständigem Material und der untere Wärmeübertrager-Teil jedoch aus weniger korrosionsbeständigem, preiswerterem Material bestehen.

Bei der geteilten Ausbildung des Wärmeübertragers ist für die Abgasführung und die Kondensatableitung vorgesehen, dass der untere Bereich des oberen Wärmeübertrager-Teils über eine Abgaskammer mit dem oberen Bereich des unteren Wärmeübertrager-Teils verbunden ist und dass die Abgaskammer unterhalb des oberen Wärmeübertrager-Teils mit einem Kondensatausgang versehen ist.

Die weitere Abgasabführung kann dadurch vervollständigt werden, dass der untere Bereich des Wärmeübertragers oder des unteren Wärmeübertrager-Teils mit einer Abgaskammer verbunden ist, an der ein Kondensatausgang und eine Abgasführung abgehen.

### Zeichnungen

Die Erfindung wird anhand von in den Zeichnungen dargestellten Ausführungsbeispielen näher erläutert. Es zeigen:
- Fig. 1: einen Vertikal-Schnitt durch einen einteiligen Wärmeübertrager und
- Fig. 2: schematisch die Ausbildung und Zusammenschaltung eines zweiteiligen Wärmeübertragers.

### Ausführungsbeispiel

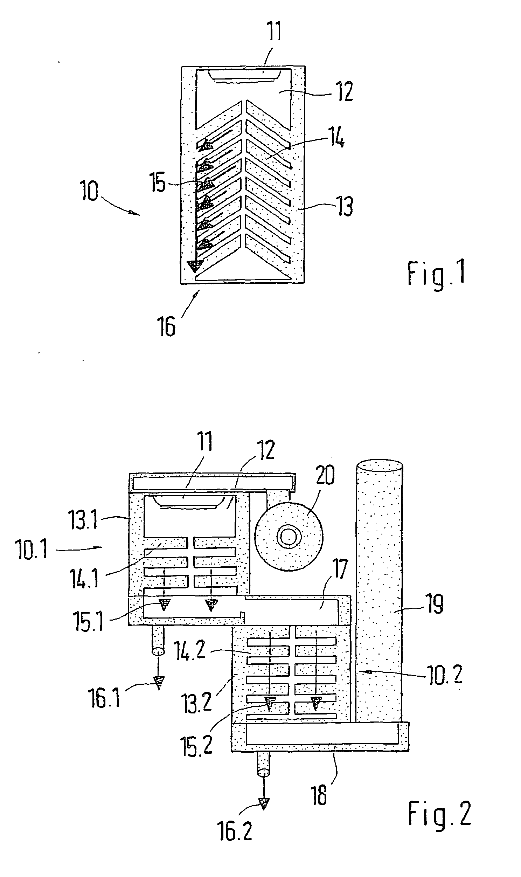

Bei dem Ausführungsbeispiel nach Fig. 1 besteht der im Sandguss-Verfahren hergestellte Wärmeübertrager 10 aus einem hülsenförmigen Mantel 13, auf dessen Innenwand Wärme-Übertragungszapfen 14 angeformt sind. Der Mantel 14 bildet im oberen Bereich eine Brennkammer 12 zur Aufnahme eines Brenners 11. Die Wärme-Übertragungszapfen 14 sind in vertikaler Richtung in mehreren beabstandeten Lagen angeordnet und erstrecken sich in dem Innenraum des Mantels 13 bis auf einen kleinen Abstand zur Mittelachse des Wärmeübertragers 10. In den Lagen sind über den Umfang verteilt die Wärme-Übertragungszapfen 14 gleichmäßig beabstandet, so dass das Abgas von oben nach unten durch den Innenraum des Wärmeübertragers 10 strömen und Wärme an die Wärme-Übertragungszapfen 14 abgeben kann. Das sich bildende Kondensat 15 fließt an den geneigten Wärme-Übertragungszapfen 14 aufgrund der Schwerkraft und der Abgasströmung entlang zur Innenwand des Mantels 13 und tropft an dieser entlang ab und sammelt sich in einer Kondensatauffangeinrichtung, die am unteren Bereich des Wärmeübertragers 10 angebracht ist, wie mit dem Bezugszeichen 16 angedeutet ist.

In den meisten Fällen genügt es, wenn zumindest in einem oberen, dem Brenner 11 zugekehrten Bereich die Wärme-Übertragungszapfen 14 geneigt an der Innenwand des Mantels 13 des Wärmeübertragers 10 angeformt sind, um das besonders saure Kondensat von dem anschließenden unteren Bereich des Wärmeübertragers 10 mit den hier waagrecht angeformten Wärme-Übertragungszapfen 14 fernzuhalten und dort eine Mischung des besonders sauren Kondensats mit dem weniger sauren Kondensat, das im brennerfernen Bereich des Wärmeübertragers 10 entsteht, zu verhindern.

Wie das Ausführungsbeispiel nach Fig. 2 zeigt, kann derselbe Effekt auch mit einem zweiteiligen Wärmeübertrager erreicht werden. Der obere Wärmeübertrager-Teil 10.1 ist gegenüber dem unteren Wärmeübertrager-Teil 10.2 seitlich so versetzt, dass das im Wärmeübertrager-Teil 10.2 anfallende Kondensat 15.1 an der Unterseite desselben aufgefangen und abgeleitet werden kann, ohne den Wärmeübertrager-Teil 10.2 passieren zu müssen. Eine Abgaskammer 1 7 verbindet die Unterseite des Wärmeübertrager-Teils 10.1 mit der Oberseite des seitlich versetzten Wärmeübertrager-Teils 10.2, so dass das Abgas von oben nach unten beide Wärmeübertrager-Teile 10.1 und 10.2 durchströmen kann.

An der Unterseite des Wärmeübertrager-Teils 10.2 ist eine weitere Abgaskammer 18 angebracht, die das im Wärmeübertrager-Teil 10.2 anfallende Kondensat 15.2 auffängt und über einen Kondensatauslass 16.2 weiterleitet. Das Abgas wird über die weitere Abgaskammer 18 einer Abgasabführung 19 zugeführt.

Das besonders saure Kondensat 15.1 des Wärmeübertrager-Teils 10.1 wird vom weniger sauren Kondensat 15.2 getrennt aufgefangen und abgeführt, wie die Kondensatauslässe 16.1 und 16.2 an den Abgaskammern 17 und 18 zeigen.

Der Wärmeübertrager-Teil 10.1 kann aus korrosionsbeständigem Material und der Wärmeübertrager-Teil 10.2 aus demselben oder einem weniger korrosionsbeständigem, kostengünstigerem Material hergestellt werden, um die Lebensdauer des Wärmeübertragers zu verlängern. Im unteren Wärmeübertrager-Teil 10.2 findet ein verminderter Korrosionsangriff durch das weniger saure Kondensat 16.2 statt.

Die angeformten Wärme-Übertragungszapfen 14.1 und 14.2 sind wieder in vertikal beabstandeten Lagen angeformt und umfangsseitig gleichmäßig beabstandet verteilt und können sich sowohl senkrecht oder geneigt in den Wärmeübertrager-Teilen 10.1 und 10.2 erstrecken. Der Wärmeübertrager-Teil 10.1 nimmt im oberen Bereich in einer Brennkammer 12 den Brenner 11 auf, der von einer Brennstoffversorgung 20 gespeist wird.

## Patentansprüche

1. Wärmeübertrager für Brennwert-Heizgeräte mit einem von der erwärmenden Flüssigkeit durchströmten Mantel (13), an dessen Innenwand in den Innenraum ragende Wärme-Übertragungszapfen (14) angeformt sind, bei dem im oberen Bereich des Innenraumes eine Brennkammer (12) mit Brenner (11) angeordnet ist, bei dem das Abgas den Innenraum durchströmt und bei dem an den unteren Bereich des Mantels eine Kondensatauffangeinrichtung angebracht ist,
**dadurch gekennzeichnet,**
**dass** zumindest in einem oberen Bereich des Mantels (13) die Wärme-Übertragungszapfen (14) zum Mantel (13) hin so geneigt angeformt sind, dass das sich bildende Kondensat (15) an den Wärme-Übertragungszapfen (14) entlang zur Innenwand des Mantels (14) abfließt.

2. Wärmeübertrager für Brennwert-Heizgeräte mit einem von der erwärmenden Flüssigkeit durchströmten Mantel (13), an dessen Innenwand in den Innenraum ragende Wärme-Übertragungszapfen (14) angeformt sind, bei dem im oberen Bereich des Innenraumes eine Brennkammer (12) mit Brenner (11) angeordnet ist, bei dem das Abgas den Innenraum durchströmt und bei dem an den unteren Bereich des Mantels eine Kondensatauffangeinrichtung angebracht ist,
**dadurch gekennzeichnet,**
**dass** er einen oberen Wärmeübertrager-Teil (10.1) und einen unteren Wärmeübertrager-Teil (10.2) umfasst, und
**dass** die beiden Wärmeübertrager-Teile (10.1, 10.2) seitlich so gegeneinander versetzt sind, dass das im oberen Wärmeübertrager-Teil (10.1) und das im unteren Wärmeübertrager-Teil (10.2) anfallende Kondensat (15.1, 15.2) getrennt voneinander aufnehmbar ist.

3. Wärmeübertrager nach Anspruch 1 oder 2,
**dadurch gekennzeichnet,**
**dass** die Wärme-Übertragungszapfen (14, 14.1, 14.2) im gesamten Mantel bzw. Mantelbereich (13, 13.1, 13.2) geneigt sind.

4. Wärmeübertrager nach Anspruch 2,
**dadurch gekennzeichnet,**
**dass** die Wärme-Übertragungszapfen (14.1, 14.2) der beiden Wärmeübertrager-Teile (10.1, 10.2) senkrecht zu dem Mantel (13.1, 13.2) angeformt sind.

5. Wärmeübertrager nach Anspruch 3 oder 4,
**dadurch gekennzeichnet,**
**dass** die Wärme-Übertragungszapfen (14, 14.1, 14.2) in mehreren, beabstandeten Lagen angeordnet sind und sich darin beabstandet über den Umfang der Innenwand des Mantels (13, 13.1, 13.2) erstrecken.

6. Wärmeübertrager nach einem der Ansprüche 1 bis 5,
**dadurch gekennzeichnet,**
**dass** der Wärmeübertrager (10) und die Wärmeübertrager-Teile (10.1, 10.2) im Sandguss-Verfahren hergestellt sind.

7. Wärmeübertrager nach Anspruch 2,
**dadurch gekennzeichnet,**
**dass** der obere Wärmeübertrager-Teil (10.1) mit dem angeformten Wärme-Übertragungszapfen (13.1) aus korrosionsbeständigem Material der untere Wärmeübertrager-Teil (10.2) aus gleichem Material oder aus weniger korrosionsbeständigem, preiswerterem Material bestehen.

8. Wärmeübertrager nach Anspruch 2,
**dadurch gekennzeichnet,**
**dass** der untere Bereich des oberen Wärmeübertrager-Teils (10.1) über eine Abgaskammer (17) mit dem oberen Bereich des unteren Wärmeübertrager-Teils (10.2) verbunden ist und
**dass** die Abgaskammer (17) unterhalb des oberen Wärmeübertrager-Teils (10) mit einem Kondensatausgang (16.1) versehen ist.

9. Wärmeübertrager nach Anspruch 1 oder 2,
**dadurch gekennzeichnet,**
**dass** der untere Bereich des Wärmeübertragers (10) oder des unteren Wärmeübertrager-Teils (10.2) mit einer Abgaskammer (18) verbunden ist, an der ein Kondensatausgang (16.2) und eine Abgasführung (19) abgehen.

10. Wärmeübertrager nach einem der Ansprüche 1 bis 9,
**dadurch gekennzeichnet,**
**dass** die Wärme-Übertragungszapfen (14) im oberen Wärmeübertrager (10) geneigt und in den unteren Wärme-Übertragungsteilen (10.1; 10. 2) waagrecht angeordnet sind.

## Claims

1. A heat exchanger for condensing heaters comprising a mantle (13) through which the heated liquid flows, at the inner wall of which heat transfer pins (14) projecting into the interior are integrally molded, in which in the upper region of the interior a combustion chamber (12) with a burner (11) is arranged, in which the exhaust gas flows through the interior, and in which at the lower region of the mantle a condensate collector is attached,
**characterized in**
**that** at least in the upper region of the mantle (13), the heat transfer pins (14) are integrally molded inclined towards the mantle (13) such that the condensate (15) being generated drains off along the heat transfer pins (14) to the inner wall of the mantle (13).

2. The heat exchanger for condensing heater comprising a mantle (13) through which the heated liquid flows, at the inner wall of which heat transfer pins (14) projecting into the interior are integrally molded, in which in the upper region of the interior a combustion chamber (12) with a burner (11) is arranged, in which the exhaust gas flows through the interior, and in which at the lower region of the mantle a condensate collector is attached,
**characterized in**
**that** it comprises an upper heat exchanger portion (10.1) and a lower heat exchanger portion (10.2), and
**that** the two heat exchanger portions (10.1, 10.2) are laterally offset to each other such that the condensate (15.1, 15.2) accumulating in the upper heat exchanger portion (10.1) and in the lower heat exchanging portion (10.2) can be collected separately from each other.

3. The heat exchanger according to claim 1 or 2,
**characterized in**
**that** the heat transfer pins (14, 14.1, 14.2) are inclined in the entire mantle or mantle region (13, 13.1, 13.2), respectively.

4. The heat exchanger according to claim 2,
**characterized in**
**that** the heat transfer pins (14.1, 14.2) of the two heat exchanger portions (10.1, 10.2) are integrally molded perpendicular to the mantle (13.1, 13.2).

5. The heat exchanger according to claim 3 or claim 4,
**characterized in**
**that** the heat transfer pins (14, 14.1, 14.2) are arranged in a plurality of layers spaced apart from each other and extend therein spaced apart from each other over the circumference of the inner wall of the mantle (13, 13.1, 13.2).

6. The heat exchanger according to any one of the claims 1 to 5,
**characterized in**
**that** the heat exchanger (10) and the heat exchanger portions (10.1, 10.2) are manufactured in the sand casting method.

7. The heat exchanger according to claim 2,
**characterized in**
**that** the upper heat exchanger portion (10.1) comprising the integrally molded heat transfer pins (13.1) consists of corrosion resistant material and the lower heat exchanger portion (10.2) consists of the same or of less corrosion resistant, more inexpensive, material.

8. The heat exchanger according to claim 2,
**characterized in**
**that** the lower region of the upper heat exchanger portion (10.1) is connected with the upper region of the lower heat exchanger portion (10.2) via an exhaust gas chamber (17) and
**that** the exhaust gas chamber (17) is provided below the upper heat exchanger portion (10) with a condensate outlet (16.1).

9. The heat exchanger according to claim 1 or claim 2,
**characterized in**
**that** the lower region of the heat exchanger (10) or of the lower heat exchanger portion (10.2) is connected with an exhaust gas chamber (18), from which a condensate outlet (16.2) and an exhaust gas routing (19) branch off.

10. The heat exchanger according to any one of the claims 1 to 9,
**characterized in**
**that** the heat transfer pins (14) are arranged inclined in the upper heat exchanger (10) and horizontal in the lower heat exchanger portions (10.1, 10.2).

## Revendications

1. Echangeur thermique destiné à des appareils de chauffage à condensation, avec une enveloppe (13) dans laquelle circule le liquide chauffant, sur la paroi intérieure de laquelle sont rapportés des tourillons de transfert thermique (14) saillant dans l'espace intérieur, sur lequel dans la zone supérieure de l'espace intérieur est disposée une chambre de combustion (12) avec brûleur (11), sur lequel les gaz de fumée circulent à travers l'espace intérieur et sur lequel, dans la zone inférieure de l'enveloppe est disposé un dispositif de récupération des condensats,
**caractérisé en ce que**,
au moins dans une zone supérieure de l'enveloppe (13), les tourillons de transfert thermique (14) sont rapportés en étant inclinés vers l'enveloppe (13), de sorte que le condensat (15) qui se forme s'écoule le long des tourillons de transfert thermique (14) vers la paroi intérieure de l'enveloppe (13).

2. Echangeur thermique destiné à des appareils de chauffage à condensation, avec une enveloppe (13) dans laquelle circule le liquide chauffant, sur la paroi intérieure de laquelle sont rapportés des tourillons de transfert thermique (14) saillant dans l'espace intérieur, sur lequel dans la zone supérieure de l'espace intérieur est disposée une chambre de combustion (12) avec brûleur (11), sur lequel les gaz de fumée circulent à travers l'espace intérieur et sur lequel, dans la zone inférieure de l'enveloppe est disposé un dispositif de récupération des condensats,
**caractérisé en ce que**,
il comprend une partie supérieure d'échangeur thermique (10.1) et une partie inférieure d'échangeur thermique (10.2) et
**en ce que** les deux parties d'échangeur thermique (10.1, 10.2) sont latéralement déportées l'une par rapport à l'autre, de sorte que les condensats (15.1, 15.2) qui se produisent dans la partie supérieure d'échangeur thermique (10.1) et ceux qui se produisent dans la partie inférieure d'échangeur thermique (10.2) soient susceptibles d'être recueillis séparément.

3. Echangeur thermique selon la revendication 1 ou 2,
**caractérisé en ce que**,
les tourillons de transfert thermique (14, 14.1, 14.2) sont inclinés dans l'ensemble de l'enveloppe ou de la zone d'enveloppe (13, 13.1, 13.2).

4. Echangeur thermique selon la revendication 2,
**caractérisé en ce que**,
les tourillons de transfert thermique (14.1, 14.2) des deux parties d'échangeur thermique (10.1, 10.2) sont rapportés à la perpendiculaire de l'enveloppe (13.1, 13.2)

5. Echangeur thermique selon la revendication 3 ou 4,
**caractérisé en ce que**,
les tourillons de transfert thermique (14, 14.1, 14.2) sont disposés en couches intérieures écartées et s'y étendent avec un écart sur la périphérie de la paroi intérieure de l'enveloppe (13, 13.1, 13.2).

6. Echangeur thermique selon l'une quelconque des revendications 1 à 5,
**caractérisé en ce que**,
l'échangeur thermique (10) et les parties d'échangeur thermique (10.1, 10.2) sont fabriqués par procédé de coulée au sable.

7. Echangeur thermique selon la revendication 2,
**caractérisé en ce que**,
la partie supérieure d'échangeur thermique (10.1) avec les tourillons de transfert thermique (13.1) rapportés consiste dans une matière résistant à la corrosion et la partie inférieure d'échangeur thermique (10.2) consiste dans la même matière ou dans une matière meilleur marché, moins résistante à la corrosion.

8. Echangeur thermique selon la revendication 2,
**caractérisé en ce que**,
la zone inférieure de la partie supérieure d'échangeur thermique (10.1) est reliée par l'intermédiaire d'une chambre de fumée (17) avec la zone supérieure de la partie inférieure d'échangeur thermique (10.2) et
**en ce que** la chambre de fumée (17) est munie en dessous de la partie supérieure d'échangeur thermique (10) d'une sortie pour condensat (16. 1).

9. Echangeur thermique selon la revendication 1 ou 2,
**caractérisé en ce que**,
la zone inférieure de l'échangeur thermique (10) ou de la partie inférieure d'échangeur thermique (10.2) est reliée avec une chambre de fumée (18), à partir de laquelle partent une sortie pour condensats (16.2) et un guidage des gaz de fumée (19).

10. Echangeur thermique selon l'une quelconque des revendications 1 à 9, **caractérisé en ce que**,
les tourillons de transfert thermique (14) sont disposés en inclinaison dans l'échangeur thermique supérieur (10) et à l'horizontale dans les parties de transfert thermiques (10.1; 10.2).
